# EUROPÄISCHE PATENTSCHRIFT

(11) **EP 2 810 795 B1**
(45) Veröffentlichungstag und Bekanntmachung des Hinweises auf die Patenterteilung: **28.12.2016**
(21) Anmeldenummer: 14159022.4
(22) Anmeldetag: 12.03.2014
(51) Int. Cl.: B60C 23/00, F16L 27/087

(54) **Drehdurchführung**
Rotary feed-through
Passage tournant

(30) Priorität: 07.06.2013 DE 102013105890
(43) Veröffentlichungstag der Anmeldung: 10.12.2014
(73) Patentinhaber: CLAAS Selbstfahrende Erntemaschinen GmbH, 33428 Harsewinkel (DE)
(72) Erfinder: Wagemann, Sebastian, 59302 Oelde (DE); Krauss, Andreas, 33428 Harsewinkel (DE)

(56) Entgegenhaltungen:
- EP-A2- 1 147 925
- DE-A1- 2 403 280
- US-A- 4 804 027

## Beschreibung

Die Erfindung betrifft gemäß dem Oberbegriff des Patentanspruchs 1 eine Drehdurchführung für ein Druckluftversorgungssystem, welche zwischen einem Stator und einem relativ zu diesem rotierenden Rotor vorgesehen ist, wobei ein im Stator angeordneter Druckluftkanal an eine Druckluftleitung angeschlossen ist und in einen im Rotor ausgebildeten Ringraum mündet, von dem zumindest ein zu einem Verbraucher führender Arbeitskanal ausgeht, und wobei der Stator im Bereich der Drehdurchführung mit einer Steuerleitung verbunden ist.

Drehdurchführungen werden verwendet, um gasförmige oder flüssige Medien zwischen zwei relativ zueinander rotierenden Bauelementen zu übertragen. Im Falle eines gasförmigen Mediums kann dieses mit einem Druck stehen oder einem Unterdruck übertragen werden, das heißt, in letzterem Fall kann über die Drehdurchführung ein Vakuum übertragen werden. Zumeist handelt es sich bei den Bauelementen um ein feststehendes, das nachfolgend als Stator bezeichnet wird, und ein gegenüber diesem rotierendes, als Rotor bezeichnetes Bauelement. Es können aber auch beide Bauelemente mit unterschiedlichen Drehzahlen oder gegenläufig rotativ angetrieben sein.

An landwirtschaftlichen Arbeitsfahrzeugen, wie zum Beispiel Traktoren und selbstfahrenden Erntemaschinen werden derartige Drehdurchführungen für Reifendruckregelanlagen verwendet, um beim Befahren eines Feldes oder einer Straße den Druck der Reifen der Antriebsräder während der Fahrt verändern zu können. Beim Betrieb des landwirtschaftlichen Arbeitsfahrzeuges auf einem Feld wird der Reifendruck insbesondere dann reduziert, wenn bei bestimmten Bodenbeschaffenheiten das Traktionsverhalten der Räder zu verbessern ist. Außerdem soll durch einen geringeren Reifendruck die aus dem Gewicht des Arbeitsfahrzeuges resultierende Bodenverdichtung reduziert werden, da sich in diesem Fall die Aufstandsfläche des Reifens vergrößern lässt. Demgegenüber soll bei einer Straßenfahrt oder beim Befahren eines festen Untergrunds der Reifendruck erhöht werden. Bei einer Straßenfahrt ist der höhere Luftdruck der Reifen erforderlich, um eine ausreichende Fahrstabilität des Arbeitsfahrzeuges zu erzielen und insgesamt den Reifenverschleiß zu verringern.

Eine Drehdurchführung für ein Druckluftversorgungssystem der im Oberbegriff des Patentanspruchs 1 angegebenen Gattung ist aus der DE 10 2005 018 584 A1 bekannt. Diese Drehdurchführung dient im Rahmen einer Reifenbefüllanlage eines landwirtschaftlichen Traktors für eine Übertragung der Druckluft zwischen einem mit einem Achskörper verbundenen Stator auf einen an einer Radnabe vorgesehenen Rotor. Ein im Stator verlaufender Druckluftkanal mündet dabei in einen zwischen dem Stator und dem Rotor vorgesehenen Spalt, über welchen die Druckluft in jeder Stellung des Rotors in dessen Arbeitskanal gelangen kann. Konzentrisch zur Längsachse der Radnabe des Achskörpers sind im Stator zwei Bürstendichtungen angeordnet, die den Spalt nach radial außen und nach radial innen abdichten. Weiterhin ist in dem Stator eine Steuerleitung geführt, die mit einem Steuerkanal in Verbindung steht. Dieser Steuerkanal steht ebenfalls über einen zwischen Stator und Rotor vorgesehenen Spalt mit einem im Rotor verlaufenden Steuerkanal in Verbindung. Dieser Übertritt ist ebenfalls mittels konzentrische verlaufender Bürstendichtungen abgedichtet. Die in Nuten des Stators angeordneten Bürstendichtungen weisen dabei metallische und/oder nicht-metallische Fasern oder Fäden auf, deren Enden auf der ihnen zugewandten Oberfläche des Rotors gleiten und dabei die beiden zur Übertragung der Druckluft vorgesehenen Zwischenräume nach außen hin abdichten. Im Reifen ist ein Reifenventil vorgesehen, über welches der Reifen aus dem Arbeitskanal mit Druckluft befüllt werden kann. Soll der Druck im Reifen reduziert werden, so wird dieses Reifenventil in entsprechender Weise über den Steuerkanal geöffnet bis der vorgesehene Reifendruck erreicht ist.

Weiterhin ist aus der DE 10 2005 006 073 A1 eine Drehdurchführung bekannt, deren Aufbau im Wesentlichen mit dem der Drehdurchführung nach der DE 10 2005 018 584 A1 übereinstimmt. Anstelle der zwischen dem Stator und dem Rotor angeordneten Bürstendichtungen werden in diesem Fall allerdings Dichtungen verwendet, die einen U-förmigen Querschnitt aufweisen und federelastische ausgebildet sein sollen. Auch bei dieser vorbekannten Drehdurchführung für eine Reifenbefüllanlage sind über einen Ringraum miteinander kommunizierende erste Druckluftkanäle zum Befüllen des Reifens und über einen weiteren Ringraum miteinander kommunizierende zweite als Steuerkanäle ausgebildete Druckluftkanäle vorgesehen. Die beiden U-förmigen Dichtungen gleiten auf den einander zugewandten Flächen des Stators und des Rotors. Die EP 1 147 9258 A2 beschreibt eine Dichtungsanordnung mit einem druckabhängig schaltbaren Dichtring, der als Leitungsabschnitt ausgebildet ist und zwei Leitungselemente bedarfsweise dicht miteinander verbindet, wobei jedes Leitungsende einen Bestandteil eines Maschinenelementes bildet.

Das US-Patent 4,804,027 beschreibt eine Fahrzugachs- und Radeinheit mit aufblasbaren Reifen, die mit einer auf dem Fahrzeug angeordneten Druckluftquelle verbindbar sind. Die Fahrzeugachs- und Radeinheit umfasst eine ringförmige Dichtungsanordnung, die ein Paar ringförmiger, sich radial erstreckender Nocken aufweist, welche bei Druckbeaufschlagung sich in dichtender Weise ausdehnen.

Die DE 2 403 280 A1 beschreibt eine Einrichtung zur Durchführung eines Druckmediums von einem feststehenden Körper zu einer drehbaren Welle.

Es ist Aufgabe der vorliegenden Erfindung, das im Bereich einer gemäß der vorgenannten Gattung ausgebildeten Drehdurchführung auftretende Reibmoment, das zu einer Temperaturerhöhung an den Gleitflächen der Abdichtung und zu deren vorzeitigem Verschleiß führt, zu verringern. Außerdem liegt der Erfindung die Aufgabe zugrunde, die Drehdurchführung derart zu gestalten, dass sie kostenmäßig günstiger herstellbar ist und einen günstigen Bauraumbedarf aufweist.

Diese Aufgabe wird, ausgehend vom Oberbegriff des Patentanspruchs 1, durch dessen kennzeichnende Merkmale gelöst. Gemäß dem kennzeichnenden Teil des Patentanspruchs 1 soll im Ringraum ein schaltbares Rückschlagventil angeordnet sein, dessen Sperrelemente sich konzentrisch zur Drehachse des Rotors innerhalb des Ringraumes erstrecken und über ein vom Stator aus in Richtung der Sperrelemente verlagerbares Betätigungselement in diesem Bereich in eine Öffnungsstellung bewegbar sind.

Die im Rahmen des schaltbaren Rückschlagventils verwendeten Sperrelemente sind folglich rotationssymmetrisch ausgebildet, so dass das Betätigungselement in jeder Position des Rotors, die dieser zum Stator einnimmt, an einer entsprechenden Stelle auf die Sperrelemente auftrifft und diese in diesem Bereich öffnen kann. Dadurch wird eine Verbindung zwischen dem im Stator vorgesehenen Druckluftkanal und dem im Rotor angeordneten Arbeitskanal hergestellt, so dass die Druckluft entweder in den Arbeitskanal einströmen oder aus diesem ausströmen kann. Da über die erfindungsgemäße Drehdurchführung keine permanente Verbindung zwischen den beiden Kanälen hergestellt ist, die in diesem Fall durch Axial- oder Radialdichtringe abgedichtet werden müsste, wirkt nur bei einer Betätigung des schaltbaren Rückschlagventils ein erhöhtes Reibmoment durch das in die Sperrelemente eingreifende Betätigungselement.

Die Folge davon ist, dass eine im Bereich der Drehdurchführung auftretende Temperaturerhöhung und ein Verschleiß weitgehend vermieden werden können. Außerdem lässt sich eine entsprechende Drehdurchführung im Rahmen einer Großserie kostenmäßig günstig herstellen, wobei die entsprechenden Bauelemente der erfindungsgemäßen Anordnung günstig montiert und demontiert werden können, so dass beispielsweise Wartungs- oder Reparaturarbeiten vereinfacht werden. Die erfindungsgemäße Anordnung weist außerdem den Vorteil auf, dass ein eventuell zwischen dem Stator und dem Rotor auftretender Achsversatz die Funktion der Drehdurchführung nicht negativ beeinflusst. Natürlich ist es auch möglich, die Bauelemente der Drehdurchführung im Rahmen einer kinematischen Umkehr derart anzuordnen, dass der Ringraum im Stator ausgebildet ist und in entsprechender Weise die Sperrelemente des schaltbaren Rückschlagventils aufnimmt. Bei dieser Anordnung, auf die sich die Erfindung ebenfalls erstrecken soll, ist dann das Betätigungselement verlagerbar im Rotor angeordnet.

Im Gegensatz zur erfindungsgemäßen Ausbildung der Drehdurchführung ist nach den Druckschriften DE 10 2005 018 584 A1 und DE 10 2005 006 073 A1 innerhalb der jeweiligen Drehdurchführung eine permanent wirkende Dichtungsanordnung vorgesehen, deren in axialer Richtung weisende Bürsten oder Dichtlippen an Gleitflächen des Rotors beziehungsweise des Stators geführt sind. Wenn entsprechende Drehdurchführungen mit einem großen Durchmesser ausgebildet sind, tritt permanent ein erhebliches Reibmoment auf, da dieses Reibmoment überproportional mit dem Durchmesser der Drehdurchführung ansteigt. Dieses Reibmoment wird außerdem unter dem Einfluss des in der Drehdurchführung anliegenden Überdrucks erheblich erhöht, wenn die entsprechenden Gleitring- oder Bürstendichtungen, wie das in der Regel der Fall ist, mit erheblichem Durchmesser ausgebildet sind. Die insgesamt auftretende Reibung, die an druckbeaufschlagten Dichtungen auftritt, wirkt sich negativ auf die Effizienz derartig ausgerüsteter Kraftfahrzeuge aus, so dass der Kraftstoffverbrauch erhöht wird. Weiterhin sind die bekannten Systeme sehr störanfällig bei Achsversatz der relativ zueinander rotierenden Komponenten Stator und Rotor, da dieser in der Regel zum Dichtungsausfall führt.

In weiterer Ausgestaltung der Erfindung soll der Ringraum innerhalb des Rotors als radiale Umfangsnut oder als stirnseitige Nut ausgebildet sein. Bei Verwendung einer radialen Umfangsnut wird demzufolge das Betätigungselement radial zu dieser Umfangsnut verlaufen und kann dabei derart radial verlagert werden, so dass es in die den Luftstrom sperrenden Sperrelemente punktuell oder über einen geringen Umfangsabschnitt eingreift, wobei es diese öffnet, so dass die Druckluft zwischen dem Druckluftkanal und dem Arbeitskanal strömen kann. Diese sind also während dieser Phase über das in die Sperrelemente eingreifende Betätigungselement miteinander verbunden. Alternativ dazu können die Sperrelemente auch in einer stirnseitigen, einen kreisringförmigen Querschnitt aufweisenden Nut angeordnet sein, wobei dann in entsprechender Weise das Betätigungselement in axialer Richtung des Rotors verlagert wird, so dass es in die Sperrelemente eingreifen und die Druckluft zu- oder abführen kann.

In einer weiteren vorteilhaften Ausgestaltung der Erfindung soll das Betätigungselement einen längsverschieblichen Zapfen mit einem Kopfstück und ein mit der Steuerleitung zusammenwirkendes Steuerelement aufweisen, wobei das Kopfstück zur Herstellung einer Verbindung zwischen dem Druckluftkanal und dem Arbeitskanal radial oder axial in die Sperrelemente des Rückschlagventils eingreift. Der längsverschiebliche Zapfen kann dabei beispielsweise als Kolben ausgebildet sein, der in einem Gehäuse des im Stator fixierten Betätigungselements längsverschiebbar geführt ist. An seinem den Sperrelementen des schaltbaren Rückschlagventils zugewandten Ende ist das entsprechende Kopfstück vorzugsweise durch eine Schraubverbindung befestigt. Dieses Kopfstück weist, wie nachfolgend noch näher erläutert werden wird, eine Außenkontur auf, die zu einem Öffnen der Sperrelemente führt, ohne diese zu beschädigen oder ein wesentliches Reibmoment zu bewirken.

Weiterhin wird vorgeschlagen, dass das Kopfstück schiffchenartig ausgebildet ist, wobei jeweils eine Spitze des schiffchenartigen Kopfstückes in Drehrichtung und entgegen der Drehrichtung gerichtet ist. Daraus ergibt sich, dass das schiffchenartig ausgebildete Kopfstück eine Längserstreckung aufweist, die größer ist als dessen Breite. Ein Kiel dieses schiffchenförmigen Kopfstückes kann dabei mit ebenen Außenmantelflächen und mit geringer Breite ausgebildet sein. Dieser Kiel kann dann in Drehrichtung und entgegen der Drehrichtung Verrundungen aufweisen oder spitz ausgebildet sein. Mittels dieses Kiels durchdringt das Kopfstück die Sperrelemente und bewirkt somit den Austausch der Druckluft zwischen dem Druckluftkanal und dem Arbeitskanal.

Zu diesem Zweck ist, wie weiterhin vorgeschlagen wird, eine Längsbohrung vorgesehen, die durch den Zapfen und das Kopfstück des Betätigungselements verläuft. In diese Längsbohrung mündet der Druckluftkanal, so dass, ausgehend von diesem mittels des entsprechenden Betätigungselements eine Verbindung zum Arbeitskanal hergestellt werden kann.

Außerdem kann das Rückschlagventil als Plattenventil ausgebildet sein. Die Sperrelemente dieses Plattenventils werden dabei aufgrund einer eigenen Vorspannung und durch den im Arbeitskanal und somit im Ringraum herrschenden Druck in ihrer Sperrstellung gehalten, in der die Sperrelemente dichtend aneinander liegen. Nur durch die Bewegung des Betätigungselements gegen die Sperrelemente wird diese Sperrwirkung in dem entsprechenden Bereich aufgehoben, indem das Kopfstück des Betätigungselements auf die Sperrelemente auftrifft. Dabei heben die Sperrelemente über die Länge des vorgenannten Kiels voneinander ab, woraufhin der Kiel den entstandenen Spalt durchdringt. Da dabei der Rotor rotiert, verlagert sich dieser Bereich entsprechend, wobei die Sperrelemente sich, in Drehrichtung gesehen, vor dem Kiel reißverschlussartig öffnen und hinter diesem reißverschlussartig schließen.

Zu diesem Zweck können die Sperrelemente, wie weiterhin vorgeschlagen wird, als an Seitenwänden des Ringraumes angeordnete zylindrische oder kreisförmige Ringe hergestellt sein, die mit ihren einander zugewandten Rändern den Druckluftstrom sperren. Dabei ist vorgesehen, dass die einander benachbarten Enden der kreisförmigen oder zylindrischen Ringe im geschlossenen Zustand des Plattenventils V-förmig zueinander verlaufen. Um diese Enden voneinander abzuheben, wird, wie bereits dargelegt, das Kopfstück in diesen spitzwinkligen Bereich, der von den Ringen gebildet wird, bewegt.

In weiterer Ausgestaltung der Erfindung kann das Steuerelement als mit dem Zapfen verbundener Ringkolben ausgebildet sein. Dieser Ringkolben wird zum Verlagern des Kopfstückes in Richtung der Sperrelemente an zumindest einer Stirnfläche mit einem Steuerdruck aus einem von der Steuerleitung ausgehenden Steuerkanal beaufschlagt. Der Ringkolben ist dabei an einer Stirnfläche, die von der mit dem Steuerdruck beaufschlagten Stirnfläche abgewandt ist, mittels einer Rückstellfeder federbelastet. Somit kann der Zapfen gemeinsam mit dem Kopfstück über einen Steuerdruck verschoben werden. In diesem Zusammenhang kann weiterhin der Zapfen dichtend in einer Aufnahmebohrung geführt sein, die im Wesentlichen gleichachsig zu einem von der Druckluftleitung ausgehenden Druckluftkanalkanal verläuft.

Alternativ zu der Betätigung des Zapfens und des daran befestigten Kopfstückes mittels eines Steuerdrucks kann außerdem das Steuerelement auch eine elektromagnetische

Aktuatorik aufweisen, so dass auf einen separaten Anschluss für einen Steuerdruck verzichtet werden kann.

Das Kopfstück, das, wie bereits dargelegt, in Richtung seines zu den Sperrelementen weisenden Endes verjüngt ausgebildet ist, kann dabei seitliche Mantelflächen aufweisen, die im Längsschnitt gesehen, zumindest abschnittsweise eine konkave oder konvexe Kontur aufweisen. Entscheidend ist, mit welcher Form des Kopfstückes die Sperrelemente in dem Bereich, in dem das Kopfstück diese voneinander abhebt, diesen Vorgang mit geringer Reibung und mit geringem Verschleiß durchführen können. Dabei kann es zweckmäßig sein, das Kopfstück mit einer Beschichtung zu versehen, die die zwischen den Sperrelementen und dem Kopfstück auftretende Reibung verringert.

Schließlich soll in weiterer Ausgestaltung der Erfindung die Drehdurchführung für eine Reifendruckregeleinrichtung eines Kraftfahrzeugs vorgesehen sein, wobei der Stator ortsfest an einem Achsgehäuse und der Rotor an einer gegenüber dem Achsgehäuse rotierenden Radnabe angeordnet sind und wobei mittels des innerhalb des Ringraums angeordneten schaltbaren Rückschlagventils während der Fahrt der Luftdruck in einem Reifen eines Antriebsrades einstellbar ist. Der im Rotor vorgesehene Arbeitskanal ist zu diesem Zweck über eine Arbeitsleitung mit dem Reifen verbunden. Mittels der erfindungsgemäßen Drehdurchführung kann somit während der Fahrt der Reifendruck erhöht oder abgesenkt werden.

Die Erfindung ist nicht auf die angegebene Kombination der Merkmale des Patentanspruchs 1 und der von diesem abhängigen Patentansprüche beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel dargestellt ist. Es zeigen:
- Figur 1: im Längsschnitt eine Anordnung einer erfindungsgemäßen Drehdurchführung zwischen einem Stator und einem Rotor,
- Figur 2: eine perspektivische Darstellung der in der Figur 1 dargestellten Drehdurchführung zur Verdeutlichung der Ausbildung eines in der Drehdurchführung verwendeten Betätigungselements und
- Figur 3: eine perspektivische Ansicht einer Anordnung der nach den Figuren 1 und 2 ausgebildeten Drehdurchführung innerhalb eines Radantriebs eines Kraftfahrzeugs.

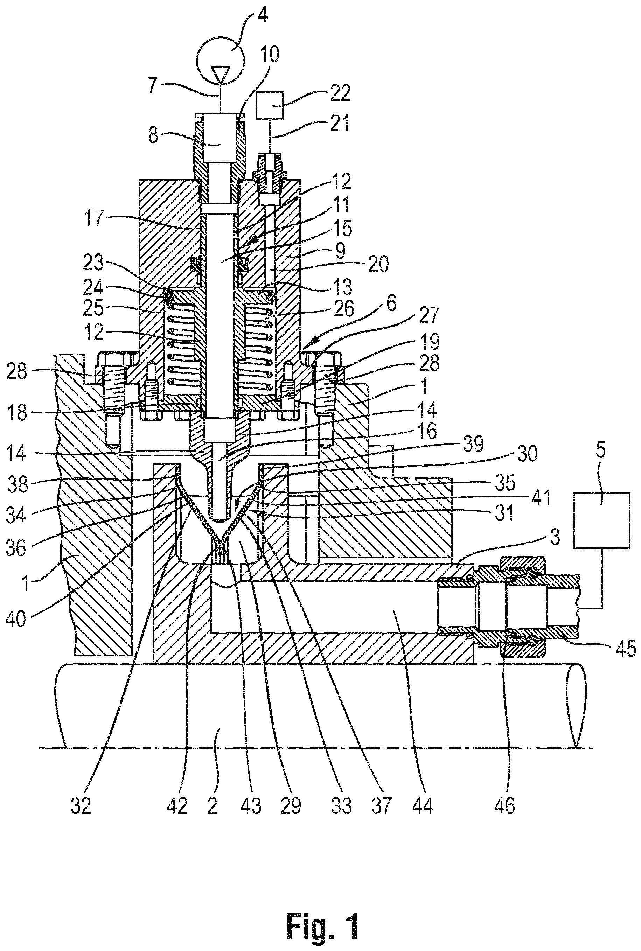

In der Figur 1 ist mit 1 ein Stator bezeichnet, in welchem über nicht näher dargestellte Wälzlager eine Antriebswelle 2 gelagert ist. Die Antriebswelle 2 kann dabei antriebsseitig mit einem Getriebe, wie zum Beispiel einem Achs- beziehungsweise Differenzialgetriebe verbunden sein und abtriebsseitig ein in der Figur 1 nicht dargestelltes Antriebsrad des Kraftfahrzeugs antreiben. Weiterhin ist auf der Antriebswelle 2 ein Rotor 3 angeordnet, bei dem es sich um eine Radnabe des Kraftfahrzeugs handeln kann. Da, ausgehend von einer am Stator 1 angeordneten Druckluftquelle 4 ein Verbraucher 5 mit einem Druckmittel versorgt werden soll oder Druckmittel aus diesem Verbraucher 5 abgeführt werden soll, ist zwischen dem Stator 1 und dem Rotor 3 eine Drehdurchführung 6, die Gegenstand dieser Erfindung ist, angeordnet.

Der Druckmitteldurchführung 6 wird dabei die Druckluft aus der Druckluftquelle 4 über eine Druckluftleitung 7 zugeführt, wobei die Druckmitteldurchführung 6 einen Druckluftkanal 8 aufweist. Dieser Druckluftkanal 8, der durch ein in ein Gehäuse 9 der Druckmitteldurchführung 6 eingeschraubtes Kupplungsstück 10 gebildet wird, führt in das Innere eines Betätigungselements 11. Das Betätigungselement 11 verfügt über einen rohrförmig ausgebildeten Zapfen 12, einen Ringkolben 13 sowie ein mit dem Zapfen 12 verbundenes Kopfstück 14. In seinem Inneren ist der Zapfen 12 mit einer Längsbohrung 15 versehen, die, ausgehend von dem Druckluftkanal 8 zum Kopfstück 14 führt, wobei das Kopfstück 14 eine Verbindungsbohrung 16 aufweist, die an einem vom Zapfen 12 abgewandten Ende des Kopfstücks 14 endet. Der Zapfen 12 ist in seinem oberen Bereich in einer Führungsbohrung 17 des Gehäuses 9 und in seinem unteren Bereich in einer Aufnahmebohrung 18 eines das Gehäuse 9 in axialer Richtung verschließenden Deckels 19 geführt.

Weiterhin befindet sich in dem Gehäuse 9 ein Steuerkanal 20, der im Wesentlichen parallel zum Zapfen 12 verläuft und über eine Steuerleitung 21 mit einer Steuervorrichtung 22 in Verbindung steht. Die Steuerleitung 21 führt in einen Druckraum 23, der den Zapfen 12 ringförmig umgibt und dabei einerseits des Ringkolbens 13 vorgesehen ist. Weiterhin weist der Ringkolben 13 einen Kolbenring 24 auf, mit welchem der Ringkolben 13 dichtend in einem innerhalb des Gehäuses 9 ausgebildeten Zylinder 25 geführt ist. An seiner vom Druckraum 23 abgewandten Stirnseite ist der Ringkolben 13 mit der Kraft einer Rückstellfeder 26 beaufschlagt, wobei diese Rückstellfeder 26 sich an ihrem anderen Ende am Deckel 19 abstützt. Das Gehäuse 9 weist dabei einen Anschraubflansch 27 auf, über das es mittels Schrauben 28 am Stator 1 fixiert ist.

Weiterhin ist Bestandteil der Drehdurchführung 6 ein im Rotor 3 ausgebildeter Ringraum 29, der im vorliegenden Fall als U-förmige, radiale Umfangsnut des Rotors 3 ausgebildet ist. Innerhalb dieses Ringraumes 29 ist ein schaltbares Rückschlagventil 30 angeordnet, das im vorliegenden Fall als Plattenventil 31 ausgebildet ist. Das Plattenventil 31 besteht aus Sperrelementen 32 und 33, von denen jedes einer Seitenwand 34 und 35 des Ringraumes 29 zugeordnet ist. Die beiden als profilierte kreisringförmige Ringe 36 und 37 ausgebildeten Sperrelemente 32 und 33 weisen zum einen jeweils einen ersten radial verlaufenden Abschnitt 38 und 39 auf, mit dem sie an den besagten Seitenwänden 34 und 35 des Ringraums 29 fixiert sind. Von diesen radial verlaufenden Abschnitten 38 und 39 gehen jeweils schräg verlaufende Abschnitte 40 und 41 aus, die unter einem spitzen Winkel aufeinander zu verlaufen. Diese schräg verlaufenden Abschnitte 40 und 41 bilden zweite radial verlaufende Abschnitte 42 und 43, die dichtend aneinander liegen und somit den Ringraum 29 nach radial außen abdichten. An den Ringraum 29 schließt sich eine zunächst radial und dann axial verlaufende Arbeitsbohrung 44 an, in deren Ende ein mit einer Arbeitsleitung 45 verbundenes Kupplungsstück 46 eingeschraubt ist. An diese Arbeitsleitung 45 ist der Verbraucher 5, dem während einer Drehbewegung des Rotors 3 aus der Druckluftquelle 4 Druckluft zugeführt werden soll oder aus dem Druckluft abgeführt werden soll, angeschlossen.

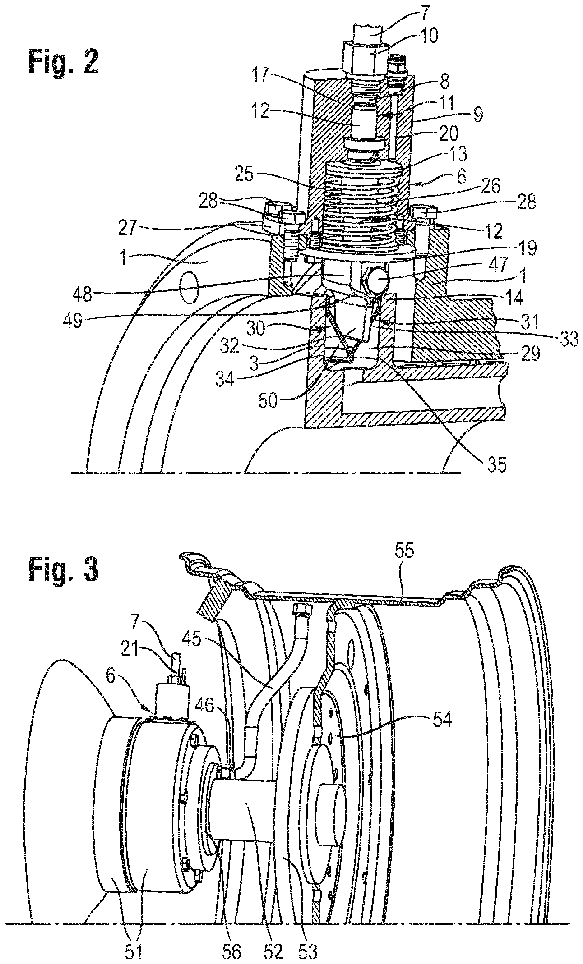

In der Figur 2, die eine Schnittdarstellung der Anordnung der Drehdurchführung 6 zwischen dem Stator 1 und dem Rotor 3 in einer perspektivischen Ansicht zeigt, ist mit den gleichen Bezugszeichen versehen wie die Figur 1, soweit die entsprechenden Bauelemente in dieser Darstellung sichtbar sind. Aus der perspektivischen Darstellung der Anordnung wird die besondere Gestaltung des Kopfstückes 14, das über eine Schraube 47 mit dem Zapfen 12 verbunden ist, deutlich. Danach ist das Kopfstück 14 schiffchenartig ausgebildet, wobei es einen Kragen 48 aufweist, dessen Längsseiten mittels eines konkaven Krümmungsabschnittes 49 in einen Kiel 50 übergehen.

Die Funktion der Anordnung nach den Figuren 1 und 2 ist Folgende:
Wenn aus der Druckluftquelle 4 Druckluft in den Verbraucher 5 gefördert werden soll, wird, ausgehend von der Steuervorrichtung 22 über die Steuerleitung 21 und die Steuerbohrung 20 der Druckraum 23 mit Druck beaufschlagt, so dass der Ringkolben 13 gegen die Kraft der Rückstellfeder 26 in Richtung des Deckels 19 verschoben wird. Das führt dazu, dass der Zapfen 12 das Kopfstück 14 radial in Richtung der Sperrelemente 32 und 33 des schaltbaren Rückschlagventils 30 bewegt, so dass der Kiel 50 zwischen den zweiten radial verlaufenden Abschnitten 42 und 43 der Ringe 36 und 37 hindurchgeführt wird. Da in diesem Zustand der Rotor 3 mitsamt der Antriebswelle 2 rotiert, verlagert sich die Eingriffsstelle des Kiels 50 zwischen den Sperrelementen 32 und 33 ständig. Über die Längsbohrung 15 des Zapfens 12 wird in diesem Zustand Druckluft zugeführt, die folglich in den Arbeitskanal 44 gelangt und somit über die Arbeitsleitung 45 dem Verbraucher 5 zugeführt wird.

In diesem Zustand, in welchem das Kopfstück 14 mittels seines Kiels 50 in das schaltbare Rückschlagventil 30 eingreift, kann auch Druckluft aus dem Verbraucher 5 in

Richtung der Druckluftquelle 4 oder eines Druckluftauslasses abgeleitet werden. Ist der gesamte Vorgang beendet, so wird der Druck am Ringkolben 13 reduziert, so dass der Zapfen 12 das Kopfstück 14 aus seiner Eingriffsstellung zwischen den Sperrelementen 32 und 33 herausbewegt. Das führt dazu, dass die als Ringe 36 und 37 ausgebildeten Sperrelemente 32 und 33 wieder über den gesamten Umfang mit ihren zweiten radial verlaufenden Abschnitten 42 und 43 dichtend aneinander anliegen. Somit ist die Druckmittelverbindung gesperrt.

Aus der Figur 3 geht die Verwendung der erfindungsgemäßen Drehdurchführung 6 bei einer Reifenbefüllanlage eines Kraftfahrzeugs, vorzugsweise eines landwirtschaftlichen Arbeitsfahrzeuges hervor. Dabei ist ein Achsrohr 51 eines Kraftfahrzeugs, vorzugsweise einer landwirtschaftlichen Arbeitsmaschine, als Stator ausgebildet, wobei innerhalb dieses Achsrohres eine gelagerte Achswelle 52 verläuft. Diese Achswelle 52 weist an ihrem Ende einen Flansch 53 auf, an welchem eine Radscheibe 54 einer Felge 55 befestigt ist. Diese Felge 55 nimmt im kompletten Zustand des Rades einen nicht näher dargestellten Reifen auf, der mit Luft befüllt oder druckentlastet werden soll. Weiterhin ist auf der Achswelle 52 drehfest eine Radnabe 56 angeordnet, von der das in Figur 1 dargestellte Kupplungsstück 46 ausgeht. Dieses Kupplungsstück verbindet die Arbeitsleitung 45 mit dem zu Figur 1 erläuterten Arbeitskanal, während die Arbeitsleitung 45 andererseits derart mit der Felge 55 verbunden ist, dass sie in das Innere des Reifens bzw. in das Innere eines im Reifen vorgesehenen Schlauches führt. Weiterhin ist nach der Figur 3 auf dem als Stator ausgebildeten Achsrohr 51 die Drehdurchführung 6 angeordnet, die entsprechend den Figuren 1 und 2 ausgebildet ist und diese Funktion aufweist.

**Bezugszeichenliste**

| | | | |
|---|---|---|---|
| 1 | Stator | 33 | Sperrelement |
| 2 | Antriebswelle | 34 | Seitenwand von 29 |
| 3 | Rotor | 35 | Seitenwand von 29 |
| 4 | Druckluftquelle | 36 | Ring |
| 5 | Verbraucher | 37 | Ring |
| 6 | Drehdurchführung | 38 | erster radial verlaufender Abschnitt von 36 |
| 7 | Druckluftleitung | | |
| 8 | Druckluftkanal | 39 | erster radial verlaufender Abschnitt von 37 |
| 9 | Gehäuse von 6 | | |
| 10 | Kupplungsstück | 40 | schräg verlaufender Abschnitt von 36 |
| 11 | Betätigungselement | | |
| 12 | Zapfen | 41 | schräg verlaufender Abschnitt von 37 |
| 13 | Ringkolben | | |
| 14 | Kopfstück | 42 | zweiter radial verlaufender Abschnitt von 36 |
| 15 | Längsbohrung | | |
| 16 | Verbindungsbohrung | 43 | zweiter radial verlaufender Abschnitt von 37 |
| 17 | Führungsbohrung | | |
| 18 | Aufnahmebohrung | 44 | Arbeitskanal |
| 19 | Deckel | 45 | Arbeitsleitung |
| 20 | Steuerkanal | 46 | Kupplungsstück |
| 21 | Steuerleitung | 47 | Schraube |
| 22 | Steuervorrichtung | 48 | Kragen von 14 |
| 23 | Druckraum | 49 | konkav verlaufender Krümmungsabschnitt von 14 |
| 24 | Kolbenring | | |
| 25 | Zylinder | 50 | Kiel von 14 |
| 26 | Rückstellfeder | 51 | Achsrohr |
| 27 | Anschraubflansch | 52 | Achswelle |
| 28 | Schrauben | 53 | Flansch |
| 29 | Ringraum | 54 | Radscheibe |
| 30 | Schaltbares Rückschlagventil | 55 | Felge |
| 31 | Plattenventil | 56 | Radnabe |
| 32 | Sperrelement | | |

## Patentansprüche

1. Drehdurchführung (6) für ein Druckluftversorgungssystem, welche zwischen einem Stator (1) und einem relativ zu diesem rotierenden Rotor (3) vorgesehen ist, wobei ein im Stator (1) angeordneter Druckluftkanal (8) an eine Druckluftleitung (7) angeschlossen ist und in einen im Rotor (3) ausgebildeten Ringraum (29) mündet, von dem zumindest ein zu einem Verbraucher (5) führender Arbeitskanal (44) ausgeht, und wobei der Stator (1) im Bereich der Drehdurchführung (6) mit einer Steuerleitung (21) verbunden ist, **dadurch gekennzeichnet, dass** im Ringraum (29) ein schaltbares Rückschlagventil (30) angeordnet ist, dessen Sperrelemente (32 und 33) sich konzentrisch zur Drehachse des Rotors (3) innerhalb des Ringraumes (29) erstrecken und über ein vom Stator (1) aus in Richtung der Sperrelemente (32 und 33) verlagerbares Betätigungselement (11) in diesem Bereich in eine Öffnungsstellung bewegbar sind.

2. Drehdurchführung (6) nach Patentanspruch 1, **dadurch gekennzeichnet, dass** der Ringraum (29) innerhalb des Rotors (3) als radiale Umfangsnut oder als stirnseitige Nut ausgebildet ist.

3. Drehdurchführung (6) nach Patentanspruch 2, **dadurch gekennzeichnet, dass** das Betätigungselement (11) einen längsverschieblichen Zapfen (12) mit einem Kopfstück (14) und eine mit der Steuerleitung (21) zusammenwirkendes Steuerelement aufweist, wobei das Kopfstück (14) zur Herstellung einer Verbindung zwischen dem Druckluftkanal (8) und dem Arbeitskanal (44) radial oder axial in die Sperrelemente (32 und 33) des Rückschlagventils (30) eingreift.

4. Drehdurchführung (6) nach Patentanspruch 3, **dadurch gekennzeichnet, dass** das Kopfstück (14) schiffchenartig ausgebildet ist, wobei jeweils eine Spitze des schiffchenartigen Kopfstück (14) in Drehrichtung und entgegen der Drehrichtung gerichtet ist.

5. Drehdurchführung (6) nach Patentanspruch 3, **dadurch gekennzeichnet, dass** das Betätigungselement (11) eine durch den Zapfen (12) und das Kopfstück (14) verlaufende Längsbohrung (15, 16) aufweist, in die der Druckluftkanal (8) einmündet.

6. Drehdurchführung (6) nach Patentanspruch 1, **dadurch gekennzeichnet, dass** das Rückschlagventil (30) als Plattenventil (31) ausgebildet ist.

7. Drehdurchführung (6) nach Patentanspruch 6, **dadurch gekennzeichnet, dass** die Sperrelemente (32 und 33) des Plattenventils (31) als an Seitenwänden (34 und 35) des Ringraumes (29) angeordnete zylindrische oder kreisringförmige Ringe (36 und 37) ausgebildet sind, die mit ihren einander zugewandten Rändern (42 und 43) den Druckluftstrom sperren.

8. Drehdurchführung (6) nach Patentanspruch 3, **dadurch gekennzeichnet, dass** das Steuerelement als mit dem Zapfen (12) verbundener Ringkolben (13) ausgebildet ist.

9. Drehdurchführung (6) nach Patentanspruch 8, **dadurch gekennzeichnet, dass** der Ringkolben (13) an zumindest einer Stirnfläche mit einem Steuerdruck aus dem Steuerkanal (21) beaufschlagbar ist.

10. Drehdurchführung (6) nach Patentanspruch 8, **dadurch gekennzeichnet, dass** an einer der Stirnflächen des Ringkolbens (13) eine Rückstellfeder (26) angreift.

11. Drehdurchführung (6) nach Patentanspruch 8, **dadurch gekennzeichnet, dass** der Zapfen (12) dichtend in einer konzentrisch zum Druckluftkanal (8) verlaufenden Aufnahmebohrung (18) geführt ist.

12. Drehdurchführung (6) nach Patentanspruch 3, **dadurch gekennzeichnet, dass** das Kopfstück (14) kegelstumpfförmig ausgebildet ist.

13. Drehdurchführung (6) nach Patentanspruch 4, **dadurch gekennzeichnet, dass** das Kopfstück (14) sich in Richtung seines Endes verjüngt ausgebildet ist, wobei seine Mantelfläche, im Längsschnitt gesehen, eine konkave Kontur oder konvexe Kontur aufweist.

14. Drehdurchführung (6) nach Patentanspruch 4, **dadurch gekennzeichnet, dass** das Steuerelement eine elektromagnetische Aktuatorik aufweist.

15. Drehdurchführung (6) nach Patentanspruch 1, **dadurch gekennzeichnet, dass** diese für eine Reifendruckregeleinrichtung eines Kraftfahrzeugs vorgesehen ist, wobei der Stator (1) ortsfest an einem Achsrohr (51) oder Achsgehäuse und der Rotor (3) an einer gegenüber dem Achsrohr (51) oder Achsgehäuse rotierenden Radnabe (56) angeordnet sind und wobei mittels des innerhalb des Ringraumes (29) angeordneten schaltbaren Rückschlagventils (30) während der Fahrt der Luftdruck in einem Reifen eines Antriebsrades einstellbar ist.

## Claims

1. A rotary transmission unit (6) for a compressed air supply system, which is provided between a stator (1) and a rotor (3) which rotates relative to the stator, wherein a compressed air passage (8) in the stator (1) is connected to a compressed air line (7) and opens into an annular chamber (29) which is in the rotor (3) and from which there extends at least one working passage (44) leading to a consumer (5), and wherein the stator (1) is connected in the region of the rotary transmission unit (6) to a control line (21), **characterised in that** arranged in the annular chamber (29) is a switchable non-return valve (30) whose blocking elements (32 and 33) extend concentrically with respect to the axis of rotation of the rotor (3) within the annular chamber (29) and are moveable by way of an actuating element (11) displaceable from the stator (1) in the direction of the blocking elements (32 and 33) **in that** region into an open position.

2. A rotary transmission unit (6) according to claim 1 **characterised in that** the annular chamber (29) within the rotor (3) is in the form of a radial peripheral groove or an end groove.

3. A rotary transmission unit (6) according to claim 2 **characterised in that** the actuating element (11) has a longitudinally displaceable shank (12) having a head portion (14) and a control element cooperating with the control line (21), wherein for making a connection between the compressed air passage (8) and the working passage (44) the head portion (14) engages radially or axially into the blocking elements (32 and 33) of the non-return valve (30).

4. A rotary transmission unit (6) according to claim 3 **characterised in that** the head portion (14) is of a ship-like configuration, wherein a respective tip of the ship-like head portion (14) is directed in the direction of rotation and in opposite relationship to the direction of rotation.

5. A rotary transmission unit (6) according to claim 3 **characterised in that** the actuating element (11) has a longitudinal bore (15, 16) which passes through the shank (12) and the head portion (14) and into which the compressed air passage (8) opens.

6. A rotary transmission unit (6) according to claim 1 **characterised in that** the non-return valve (30) is in the form of a plate valve (31).

7. A rotary transmission unit (6) according to claim 6 **characterised in that** the blocking elements (32 and 33) of the plate valve (31) are in the form of cylindrical or annular rings (36 and 37) which are arranged at side walls (34 and 35) of the annular chamber (29) and which block the flow of compressed air with their mutually facing edges (42 and 43).

8. A rotary transmission unit (6) according to claim 3 **characterised in that** the control element is in the form of an annular piston (13) connected to the shank (12).

9. A rotary transmission unit (6) according to claim 8 **characterised in that** the annular piston (13) can be acted upon at at least one end face with a control pressure from the control passage (21).

10. A rotary transmission unit (6) according to claim 8 **characterised in that** a return spring (26) engages one of the end faces of the annular piston (13).

11. A rotary transmission unit (6) according to claim 8 **characterised in that** the shank (12) is guided sealingly in a receiving bore (18) extending concentrically relative to the compressed air passage (8).

12. A rotary transmission unit (6) according to claim 3 **characterised in that** the head portion (14) is of a frustoconical configuration.

13. A rotary transmission unit (6) according to claim 4 **characterised in that** the head portion (14) is of a narrowing configuration in the direction of its end, wherein its peripheral surface, viewed in longitudinal section, has a concave or convex contour.

14. A rotary transmission unit (6) according to claim 4 **characterised in that** the control element has an electromagnetic actuator.

15. A rotary transmission unit (6) according to claim 1 **characterised in that** it is provided for a tyre pressure regulating device of a motor vehicle, wherein the stator (1) is arranged stationarily at an axle tube (51) or axle housing and the rotor (3) is arranged at a wheel hub (56) which rotates with respect to the axle tube (51) or axle housing and wherein the tyre pressure in a tyre of a drive wheel is adjustable while travelling by means of the switchable non-return valve (30) arranged within the annular chamber (29).

## Revendications

1. Passage tournant (6) pour un système d'alimentation en air comprimé, lequel est prévu entre un stator (1) et un rotor (3) tournant par rapport à celui-ci, un canal d'air comprimé (8) disposé dans le stator (1) étant raccordé à une conduite d'air comprimé (7) et débouchant dans un espace annulaire (29) qui est formé dans le rotor (3) et dont part au moins un canal de travail (44) conduisant à un organe utilisateur (5), et le stator (1) étant relié à une ligne de commande (21) dans la zone du passage tournant (6), **caractérisé en ce que** dans l'espace annulaire (29) est disposé un clapet anti-retour commutable (30) dont les éléments de blocage (32 et 33) s'étendent concentriquement à l'axe de rotation du rotor (3) à l'intérieur de l'espace annulaire (29) et peuvent être déplacés dans cette zone vers une position d'ouverture par un élément d'actionnement (11) déplaçable à partir du stator (1) en direction des éléments de blocage (32 et 33).

2. Passage tournant (6) selon la revendication 1, **caractérisé en ce que** l'espace annulaire (29) est réalisé à l'intérieur du rotor (3) sous la forme d'une rainure périphérique radiale ou d'une rainure frontale.

3. Passage tournant (6) selon la revendication 2, **caractérisé en ce que** l'élément d'actionnement (11) présente un tourillon (12) coulissant longitudinalement pourvu d'une partie tête (14) et un élément de commande qui coopère avec la ligne de commande (21), la partie tête (14) s'engageant radialement ou axialement dans les éléments de blocage (32 et 33) du clapet anti-retour (30) pour établir une liaison entre le canal d'air comprimé (8) et le canal de travail (44).

4. Passage tournant (6) selon la revendication 3, **caractérisé en ce que** la partie tête (14) est réalisée en forme de navette, les pointes de la partie tête (14) en forme de navette étant respectivement dirigées dans le sens de rotation et à l'encontre du sens de rotation.

5. Passage tournant (6) selon la revendication 3, **caractérisé en ce que** l'élément d'actionnement (11) présente un alésage longitudinal (15, 16) s'étendant à travers le tourillon (12) et la partie tête (14), qui débouche dans le canal d'air comprimé (8).

6. Passage tournant (6) selon la revendication 1, **caractérisé en ce que** le clapet anti-retour (30) est réalisé sous la forme d'une soupape à plaque (31).

7. Passage tournant (6) selon la revendication 6, **caractérisé en ce que** les éléments de blocage (32 et 33) de la soupape à plaque (31) sont réalisés sous la forme de bagues cylindriques ou annulaires (36 et 37) qui sont disposées sur les parois latérales (34 et 35) de l'espace annulaire (29) et qui bloquent le courant d'air comprimé par leurs bords (42 et 43) tournés l'un vers l'autre.

8. Passage tournant (6) selon la revendication 3, **caractérisé en ce que** l'élément de commande est réalisé sous la forme d'un piston annulaire (13) relié au tourillon (12).

9. Passage tournant (6) selon la revendication 8, **caractérisé en ce que** le piston annulaire (13) peut être exposé, au moins sur une face frontale, à une pression de commande provenant du canal de commande (21).

10. Passage tournant (6) selon la revendication 8, **caractérisé en ce qu'**un ressort de rappel (26) agit sur une des faces frontales du piston annulaire (13).

11. Passage tournant (6) selon la revendication 8, **caractérisé en ce que** le tourillon (12) est guidé de façon étanche dans un alésage de réception (18) s'étendant concentriquement au canal d'air comprimé (8).

12. Passage tournant (6) selon la revendication 3, **caractérisé en ce que** la partie tête (14) est réalisée sous forme tronconique.

13. Passage tournant (6) selon la revendication 4, **caractérisé en ce que** la partie tête (14) possède une forme effilée en direction de son extrémité, sa surface extérieure présentant, vue en coupe longitudinale, un contour concave ou convexe.

14. Passage tournant (6) selon la revendication 4, **caractérisé en ce que** l'élément de commande présente un actionneur électromagnétique.

15. Passage tournant (6) selon la revendication 1, **caractérisé en ce qu'**il est prévu pour un dispositif de régulation de la pression des pneumatiques d'un véhicule automobile, dans lequel le stator (1) est disposé de manière fixe sur un tube d'essieu (51) ou un carter d'essieu et le rotor (3) sur un moyeu de roue (56) tournant par rapport au tube d'essieu (51) ou au carter d'essieu, et dans lequel la pression d'air dans un pneumatique d'une roue motrice peut être réglée pendant la marche au moyen du clapet anti-retour commutable (30) disposé à l'intérieur de l'espace annulaire (29).
